# FASCICULE DE BREVET EUROPEEN

(11) **EP 0 659 279 B1**
(45) Date de publication et mention de la délivrance du brevet: **12.11.1997**
(21) Numéro de dépôt: 93919430.4
(22) Date de dépôt: 08.09.1993
(51) Int. Cl.: G01P 13/00, B22D 2/00, G01J 5/08

(54) **DISPOSITIF DE DETECTION DE L'ARRIVEE D'UN JET DE METAL LIQUIDE, ET UTILISATION D'UN TEL DISPOSITIF**
VORRICHTUNG ZUR FESTSTELLUNG DER ANKUNFT EINES STRAHLES AUS FLÜSSIGEM METALL, SOWIE DIE ANWENDUNG DES VERFAHRENS
DEVICE FOR DETECTING THE ARRIVAL OF A JET OF MOLTEN METAL, AND USE OF SUCH A DEVICE

(30) Priorité: 10.09.1992 FR 9210939; 30.06.1993 FR 9308166
(43) Date de publication de la demande: 28.06.1995
(73) Titulaire: PONT-A-MOUSSON S.A., 54000 Nancy (FR)
(72) Inventeur: HEIDINGER, Bruno, F-54180 Heillecourt (FR); DE NADAI, Gilles, F-54700 Pont-à-Mousson (FR); BECCARA, Pascal, F-54700 Blénod-lès-Pont-à-Mousson (FR)
(74) Mandataire: Puit, Thierry
(86) Numéro de dépôt international: FR9300859
(87) Numéro de publication internationale: WO9406023

(56) Documents cités:
- EP-A- 0 458 200
- DE-A- 2 558 713
- DE-A- 2 751 446
- DE-A- 3 129 217
- DE-B- 2 637 421
- DE-C- 3 710 486
- PATENT ABSTRACTS OF JAPAN vol. 10, no. 81 (M-465)29 Mars 1986 & JP,A,60 221 160 (SUMITOMO) 5 Novembre 1985
- GLASTECHNISCHE BERICHTE vol. 44, no. 6 , Juin 1971 pages 237 - 241 J.KOUDELKA ET AL. 'Indirekte Messung der Oberflächentemperatur eines Glasstreifens mit einem Strahlungspyrometer'
- PATENT ABSTRACTS OF JAPAN vol. 7, no. 32 (P-174)8 Février 1983 & JP,A,57 184 920 (KUBOTA TEKKO) 13 Novembre 1982

## Description

La présente invention est relative à la détection de l'arrivée d'un jet de métal provenant d'un bec de coulée par exemple d'une poche ou d'un canal. Plus particulièrement, elle concerne un dispositif permettant la détection du passage d'objets lumineux tels qu'un jet de métal liquide.

Les dispositifs utilisés de contrôle de niveau de métal liquide émettant des rayons infrarouges, donc d'objets lumineux, comprennent un photo-élément standard muni de caches délimitant une zone sensible (voir par exemple le document n° FR-A-2 286 373).

De tels dispositifs sont limités à la détection d'un liquide confiné dans un récipient. En effet l'image est formée par une fenêtre allongée aménagée dans le cache visant une zone de la surface libre du bain. Donc un déplacement vertical de tout l'ensemble de la surface du bain est détecté. Ce dispositif n'est pas en mesure de détecter systématiquement l'arrivée d'un jet de métal car dans cette situation le métal n'arrive pas suivant une surface plane ou même rectiligne, comme c'est le cas lors d'une montée du niveau de métal liquide dans une poche.

En outre, le capteur de ces dispositifs connus est courant et adapté avec un cache qui forme la fenêtre, si bien qu'une partie de la surface efficace a été supprimée, ce qui entraîne une perte de rendement de ce capteur.

De plus, il n'est pas prévu d'orienter les dispositifs connus dans la direction de la zone à surveiller où l'on prévoit le passage d'objets lumineux en créant une image de ladite zone permettant un préréglage.

On connaît par le document DE-A-3 129 217 Al un système de détection de la fin d'un jet de métal liquide permettant de :
1) Former une image optique d'une zone surveillée sur un transducteur photoélectrique, ladite zone étant située en dessous de la réserve de métal et délimitée par quatre plans dont les angles entre eux sont tels que ladite zone de l'image forme un rectangle.
2) Convertir en grandeur électrique la lumière provenant du métal dès son arrivée dans la zone comprise entre lesdits plans.
3) Transmettre la grandeur électrique constituant l'information fonctionnelle.

Le dispositif connu présente des limitations car il a été prévu de détecter les scories en fin de coulée. Donc l'emplacement du jet de métal liquide est connu car tombant verticalement sous la poche, ce qui ne pose pas de problème de dimensionnement et forme de la zone surveillée. Si ici elle est rectangulaire cela est dû à l'utilisation d'une caméra à bande et non à un choix géométrique en fonction de l'emplacement de la chute de métal.

Au contraire l'invention permet de détecter la première goutte de métal provenant d'un bec de coulée. Les becs de coulée présentant généralement une grande largeur, il s'ensuit que l'emplacement de l'arrivée de la chute de métal n'est pas connu à l'avance.

Pour cela il faut surveiller une zone d'une taille et d'une géométrie englobant tous les points de chute possible.

Il serait très grave de ne pas détecter l'arrivée d'un métal à une température supérieure à son point de fusion.

L'invention a pour but de remédier à ces inconvénients et de fournir une détection immédiate du passage d'un objet lumineux.

Elle a pour objet un dispositif de détection de l'arrivée d'un jet de métal liquide, du type comprenant, monté dans un boîtier, un système notamment optique et de détection de la lumière provenant d'une zone surveillée comprise entre au moins deux plans sécants, ce système comportant un objectif à focale réglable et sur une carte électronique un convertisseur relié électriquement à un transducteur photo-électrique, ledit convertisseur étant relié à un comparateur lui-même relié à un étage tampon, le convertisseur, le comparateur et l'étage tampon étant branchés à une alimentation, ce dispositif comprenant également une source de lumière, la carte électronique étant située entre la zone de détection de passage du jet de métal liquide et la source de lumière, au moins une ouverture rectangulaire étant formée dans la carte électronique et coopérant avec le transducteur photo-électrique présentant la forme de la zone exploitée de l'image de l'objet surveillé, c'est-à-dire rectangulaire, l'ouverture de la carte électronique étant adaptée pour être traversée par les rayons de la source de lumière, de manière à matérialiser la zone de détection par la formation d'une image réelle de l'ouverture, les rayons de la source de lumière, après traversée de l'ouverture, passant par le même système optique que la lumière détectée.

Suivant d'autres caractéristiques du dispositif :
- l'ouverture traversante est adjacente au transducteur photo-électrique,
- un moyen de sécurité thermique est relié à la source lumineuse,
- le moyen de sécurité thermique est constitué d'un capteur de conversion de la température en signal électrique, d'un moyen fournissant une référence de la valeur de seuil du signal électrique, d'un comparateur à seuil, d'un relais, le capteur de conversion de la température en signal électrique et le moyen fournissant une référence de la valeur de seuil du signal électrique étant chacun reliés à une entrée du comparateur, le relais étant relié à la sortie du comparateur à seuil par l'intermédiaire d'un étage tampon et à la source de lumière,
- le couvercle creux contenant la source de lumière présente un moyen de refroidissement, en particulier des ailettes,
- la source de lumière est constituée d'une lampe halogène et d'un filtre thermique de manière à ne transmettre que la lumière froide.

Un exemple de mise en oeuvre de l'invention va maintenant être décrit en regard des dessins annexés sur lesquels :
- la Fig. 1 représente schématiquement la détection de métal liquide sortant par jet déversé par le bec d'une poche de coulée ;
- la Fig. 2 représente les plans délimitant la zone surveillée par le dispositif conforme à l'invention ;
- la Fig. 3 est un schéma de l'arrangement des composants fixés sur une carte électronique ;
- la Fig. 4 représente une vue en coupe d'une variante d'un dispositif de détection ;
- la Fig. 5 représente une vue en coupe éclatée d'un dispositif selon l'invention pouvant être orienté en fonction de la zone surveillée ;
- la Fig. 6 est un schéma d'une autre variante de l'arrangement des composants fixés sur la carte électronique correspondant au dispositif de la Fig. 5.

On notera tout d'abord sur les dessins que les éléments identiques portent les mêmes références. Ainsi la référence 1 désigne la carte électronique ou la zone surveillée la référence 10.

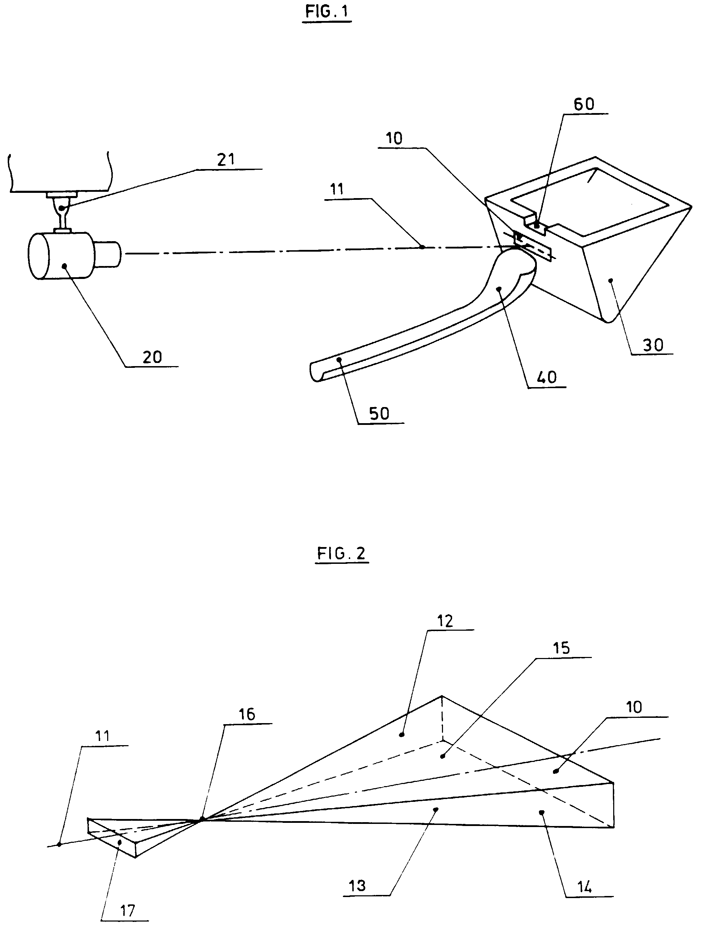

L'installation représentée à la Fig. 1 présente la zone surveillée 10 à une extrémité de l'axe optique 11 prolongeant le détecteur 20 selon l'invention maintenu par le support 21.

La zone surveillée 10 de forme rectangulaire allongée horizontalement se situe au niveau d'une poche 30 de coulée de métal liquide au-dessus d'un déversoir 40 d'un canal 50 et en dessous du bec de coulée 60 de la poche 30.

La zone surveillée 10 est délimitée par les plans 12, 13, 14 et 15 représentés à la Fig. 2. Lesdits plans présentent un point d'intersection 16 sur l'axe optique 11, en particulier au centre optique de l'objectif.

Deux des plans 12, 13 sécants sont proches de la position horizontale et les deux autres 14, 15 sont verticaux. L'axe 11 est l'axe de symétrie de ces plans.

L'axe 11 est perpendiculaire au passage du jet de métal liquide.

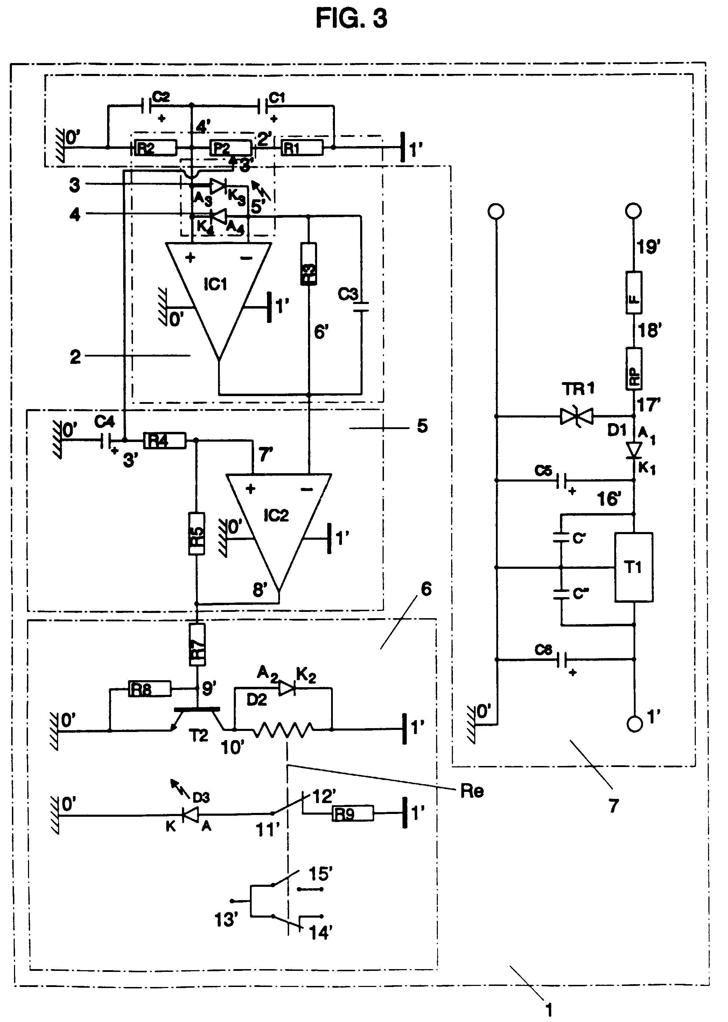

En partant de la zone surveillée, au delà du point d'intersection 16 des plans 12, 13, 14, 15 il se forme un plan image 17 représentant la zone 10. Le plan image 17 est représenté après un réglage optique, sur un transducteur photo-électrique 3, typiquement une photodiode, représentée à la Fig. 3. Cette photodiode 3 transforme le flux lumineux reçu en un courant électrique. Elle est branchée à un convertisseur 2 branché à un comparateur 5 branché à un étage tampon 6. Une alimentation électrique 7 est branchée au comparateur 5 à l'étage tampon 6 et au convertisseur 2. Une diode de protection 4 est branchée en antiparallèle au transducteur photo-électrique 3.

Les composants électroniques sont reliés par des liaisons équipotentielles référencées de 0' à 20' dans lesquels 0' représente le branchement à la masse et 1' l'alimentation positive régulée et 19' l'entrée d'alimentation positive non régulée.

Le convertisseur 2 comprend trois résistances R1, R2, R3, trois capacités C1, C2, C3, un amplificateur opérationnel IC1 et un potentiomètre P2.

La résistance R1 est comprise entre les liaisons équipotentielles 2' et 1'. La résistance R2 est connectée aux liaisons 0' et 4'. La résistance R3 est connectée aux liaisons 5' et 6'. La capacité C2 est connectée aux liaisons 0' et 4' côté positif ; la capacité C1 est connectée aux liaisons 4' et 1', côté positif ; la capacité C3 est connectée aux liaisons 5' et 6'. Le potentiomètre P2 est connecté aux liaisons 4' et 2'. Ledit potentiomètre P2 est aussi relié par son curseur à la liaison 3'.

L'amplificateur opérationnel IC1 présente une entrée non inverseuse branchée à la liaison 4', l'entrée inverseuse branchée en 5' et une sortie branchée à la liaison 6'.

Cette structure du convertisseur 2 permet de minimiser le courant d'obscurité de la photodiode 3. L'anode A3 de ladite photodiode 3 et la cathode K4 de la diode 4 sont reliées à la liaison équipotentielle 4'.

La cathode K3 de la photodiode 3 et l'anode A4 de la diode 4 sont reliées à la liaison équipotentielle 5'.

Le comparateur 5 comprend deux résistances R4 et R5, une capacité C4 et un amplificateur IC2.

La résistance R4 est branchée aux liaisons 3' et 7'.

La résistance R5 est branchée aux liaisons 7' et 8'.

La capacité C4 est branchée aux liaisons 0' et 3' côté positif.

L'amplificateur IC2 est branché aux liaisons 6', 7' et 8' respectivement par son entrée inverseuse, son entrée non inverseuse et sa sortie.

Le comparateur 5 compare la tension de sortie du convertisseur 2 à une tension de référence déterminée par le potentiomètre P2.

L'étage tampon 6 comprend trois résistances R7, R8 et R9, deux diodes D2, D3, un transistor T2 et un relais R formé d'une bobine et de trois interrupteurs.

La résistance R7 est branchée aux liaisons 8' et 9'

La résistance R8 est branchée aux liaisons 9' et 0'

La résistance R9 est branchée aux liaisons 1' et 12'

Le transistor T2 est branché aux liaisons 0' et 9' et 10' respectivement aux électrodes émetteur base collecteur.

La diode D2 est branchée aux liaisons 1' et 10' respectivement par sa cathode K2, et son anode A2.

La diode D3 est branchée aux liaisons 0' et 11' respectivement par sa cathode K et son anode A.

La bobine du relais est branchée aux liaisons 1' et 10'.

Les trois interrupteurs du relais sont branchés respectivement aux liaisons 11' et 12' normalement fermé, 13' et 14' normalement fermé, 13' et 15' normalement ouvert.

L'alimentation 7 comprend une résistance RP, quatre capacités C5, C6, C', C", une diode D1, un fusible F, une diode zener de protection TR1 et un régulateur T1.

La résistance RP est branchée aux liaisons 17' et 18'.

La capacité C5 est branchée aux liaisons 0' et 16' côté positif.

La capacité C6 est branchée aux liaisons 0' et 1' côté positif.

La capacité C' est branchée aux liaisons 0' et 16'.

La capacité C" est branchée aux liaisons 0' et 1'.

La diode D4 est branchée aux liaisons 16' par la cathode et 17' par l'anode.

Le fusible F est branché aux liaisons 18' et 19'.

Le régulateur T1 est branché aux liaisons 1' par sa sortie, 16' par son entrée et 0' par sa référence.

La diode de protection TR1 qui remplit une fonction d'écrêteur, est branchée aux liaisons 0' et 17'.

L'alimentation 7 comprend un diviseur relié électriquement au convertisseur 2 et au comparateur 5, ledit diviseur fournissant la tension repos du convertisseur 2 et la tension de référence du comparateur 5.

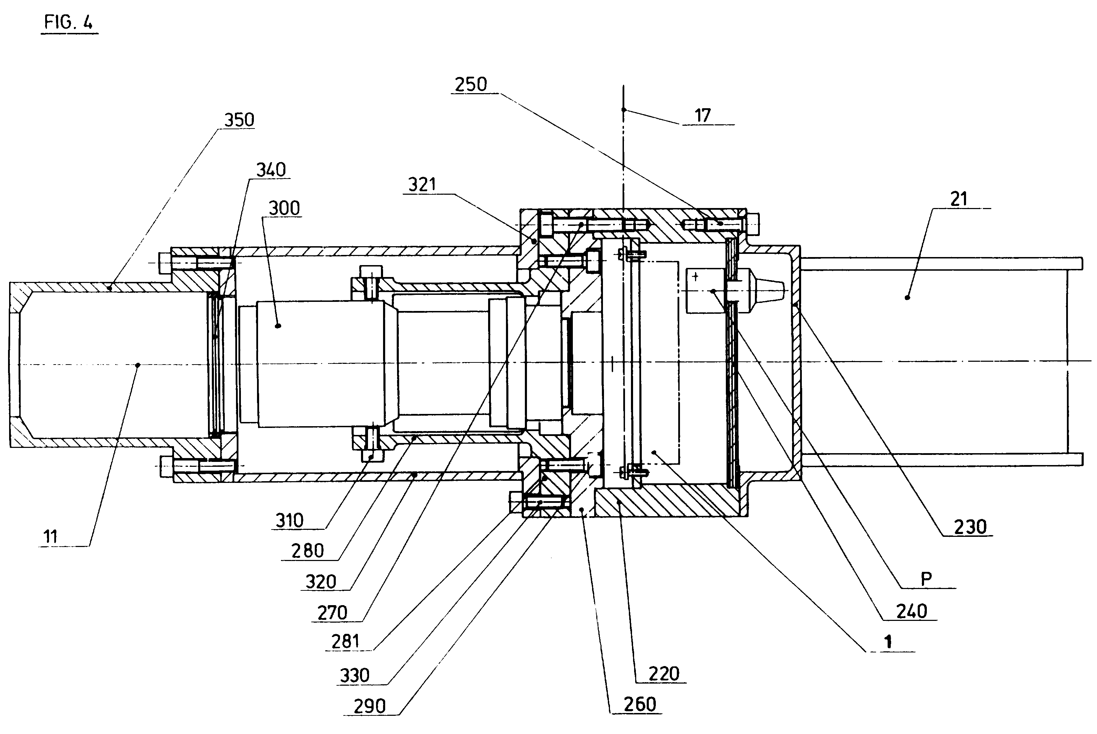

La Fig. 4 représente le dispositif 20 maintenu par le système de fixation 21. Le dispositif 20 comprend un boîtier cylindrique creux 220 fermé à une extrémité par un couvercle 230 emprisonnant une rondelle 240 qui ferme radialement le creux interne du boîtier 220. La rondelle 240 supporte le potentiomètre P2.

Le couvercle 230 est maintenu sur le boîtier par des vis 250. En se dirigeant vers la deuxième extrémité, le boîtier 220, entoure la carte électronique 1 placée radialement au boîtier 220 dans le plan image 17. Un flasque 260 présentant un diamètre cylindrique creux plus petit que le diamètre du boîtier est fixé à la deuxième extrémité au moyen de vis 270. Une bride de blocage creuse 280 sensiblement cylindrique est fixée par des vis 290 sur le flasque 260. La bride de blocage 280 présente à une extrémité une embase 281 au contact du flasque. Ladite bride 280 entoure l'objectif à focale réglable 300 et permet le blocage de ce dernier par des vis de serrage 310 traversant deux perçages débouchants usinés à l'extrémité libre de la bride de blocage 280.

L'objectif 300 et la bride 280 sont entourés par un tube de protection 320 fixé à l'embase 281 de la bride 280 par l'intermédiaire d'une collerette 321 et de vis 330. Le tube 320 est formé par un filtre ultra-violet 340 de protection de l'objectif 300. L'ensemble du dispositif se termine par une buse de soufflage 350 orientée vers le passage du jet de métal liquide. Le dispositif 20 forme sensiblement un cylindre d'axe confondu à l'axe optique 11.

Le boîtier 220 et le tube 320 sont en un métal présentant une perméabilité magnétique et une conductivité électrique d'un niveau apte à fournir une immunité face aux perturbations magnétiques et électriques.

Le couvercle 230 et la buse 350 protègent le dispositif 20 des poussières. Toutes ces agressions, magnétiques, électriques, poussières provenant de l'environnement ambiant dans une usine sont arrêtées par le tube 320, le couvercle 230, la buse de soufflage 350 et le boîtier 220.

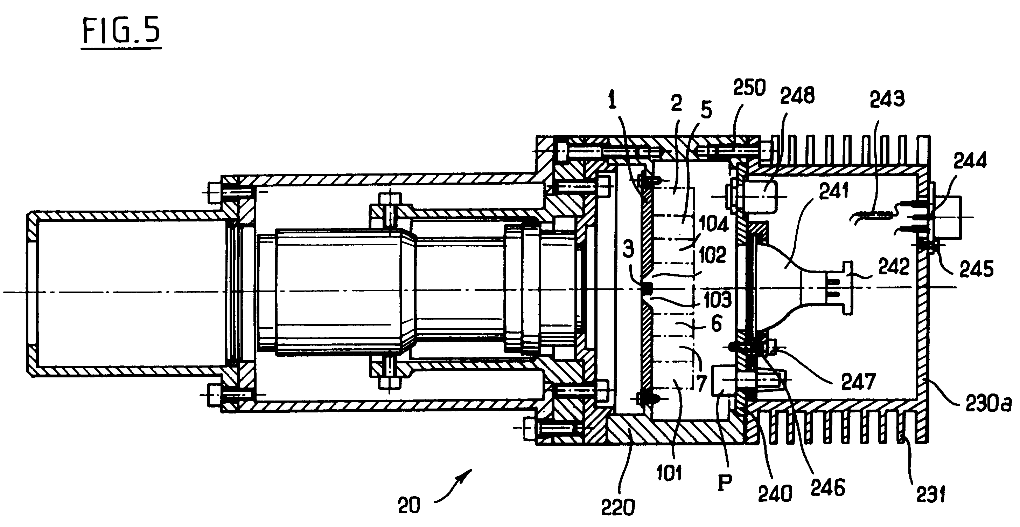

Sur la Fig. 5 on a représenté un dispositif 20 de détection de métal liquide dont le système optique et le boîtier sont identiques à ceux de la Fig. 4, les éléments identiques étant repérés par les mêmes références numériques sur les deux figures.

Ce dispositif diffère de celui représenté à la Fig. 4 en ce qu'il comprend une lampe 241 avec filtre thermique située sur la rondelle 240 qui supporte également un porte fusible 248, l'ensemble potentiomètre P, lampe 241 et porte fusible 248 est contenu dans un couvercle 230 à ailettes de refroidissement 231. La lampe 241 comporte une douille 242 reliée par des câbles 243 à un connecteur à embase 244 fixé sur le couvercle 230a par des vis 245.

Le dispositif de la Fig. 5 diffère également de celui de la Fig. 4 en ce que la carte électronique 1 comporte deux fentes rectangulaires horizontales 102, 103 au voisinage de la photodiode 3. Une fente 102 est située au-dessus de la photodiode 3, la fente 103 est située au-dessous.

Les fentes 102, 103 traversantes sont taillées en biseau, la grande ouverture située vers la lampe 241, la petite ouverture située vers la zone surveillée 10. La carte électronique 1 comprend en plus du convertisseur 2, du comparateur 5, de l'étage tampon 6 et de l'alimentation électrique 7, un moyen de sécurité en température 101 et un générateur de courant 104.

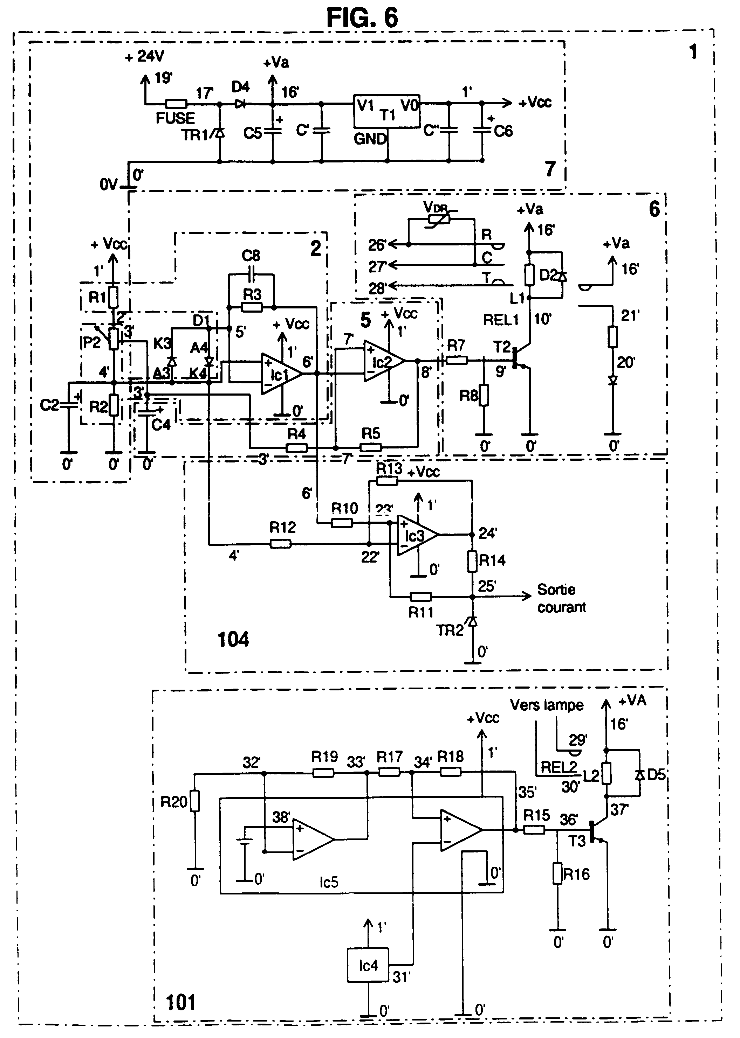

La Fig. 6 représente l'arrangement des composants fixés sur la carte électronique 1 correspondant au dispositif représenté Fig. 5.

Ce dispositif diffère de celui représenté à la Fig. 3 en ce qu'il comprend un étage électronique formant un moyen de sécurité thermique 101, un générateur de courant 104, le fusible F de l'alimentation 7 est raccordé à la liaison 17', la capacité C1 a été enlevée et l'étage tampon 6 est modifié de la manière suivante : la résistance R9 est branchée aux liaisons 20' et 21', la diode D3 est branchée aux liaisons O' et 20' respectivement par sa cathode et son anode. Les trois interrupteurs du relais R1 sont branchés respectivement aux liaisons 16' et 21' normalement fermé, 27' et 26' normalement fermé, 27' et 28' normalement ouvert. La bobine du relais 1 est branchée aux liaisons 10' et 16' et la diode D2 est branchée aux liaisons 16' et 10' respectivement par sa cathode et son anode.

L'étage tampon 6 est apte à recevoir un moyen de protection tel qu'une résistance non linéaire VDR entre les liaisons 26' et 27'.

Le moyen de sécurité thermique 101 se compose de six résistances R15, R16, R17, R18, R19, R20, d'un transistor T3, d'un relais L2 formé d'une bobine et d'un interrupteur, d'une diode D5 d'un circuit intégré IC5 formé de deux amplificateurs opérationnels et d'une référence de tension, et d'un capteur de température IC4.

La résistance R15 est branchée aux liaisons 35' et 36'.

La résistance R16 est branchée aux liaisons 0' et 36'.

La résistance R17 est branchée aux liaisons 33' et 34'.

La résistance R18 est branchée aux liaisons 34' et 35'.

La résistance Rl9 est branchée aux liaisons 32' et 33'.

La résistance R20 est branchée aux liaisons 0' et 32'.

Le transistor T3 est branché aux liaisons 0', 36', 37' respectivement aux électrodes émetteur, base, collecteur.

La bobine du relais L2 est branchée aux liaisons 16' et 37'.

L'interrupteur du relais L2 est branché en série dans le circuit d'alimentation de la lampe halogène par les liaisons 30' et 29.

La diode D5 est branchée aux liaisons 16' et 37' respectivement par sa cathode et son anode.

La référence de tension est branchée aux liaisons 0' et 38' respectivement par sa cathode et son anode.

Le premier amplificateur opérationnel de IC5 est branché aux liaisons 32', 38', 33' respectivement par son entrée inverseuse, son entrée non inverseuse et sa sortie.

Le deuxième amplificateur opérationnel de IC5 est branché aux liaisons 31', 34', 35' respectivement par son entrée inverseuse, son entrée non inverseuse et sa sortie.

Le capteur de température IC4 est branché aux liaisons 0', 1', 31' respectivement par son alimentation négative, son alimentation positive et sa sortie.

Le générateur de courant 104 comprend cinq résistances R10, R11, R12, R13, R14, une diode de protection TR2 et un amplificateur opérationnel IC3.

La résistance R10 est branchée aux liaisons 6' et 23'.

La résistance R11 est branchée aux liaisons 23' et 25'.

La résistance R12 est branchée aux liaisons 4' et 22'.

La résistance R13 est branchée aux liaisons 22' et 24'.

La résistance R14 est branchée aux liaisons 24' et 25'.

La diode de protection TR2 est branchée aux liaisons 25' et 0' respectivement par sa cathode et son anode.

L'amplificateur opérationnel IC3 est branché aux liaisons 22', 23' et 24' respectivement par son entrée inverseuse, son entrée non inverseuse et sa sortie.

L'alimentation positive et l'alimentation négative des amplificateurs IC1, IC2 et IC3 du capteur IC4 et du circuit intégré IC5 sont respectivement reliées aux liaisons 1' et 0'.

Le fonctionnement de l'installation est le suivant : la poche 30 bascule, le métal liquide est projeté par jet du bec de coulée 60 dans le déversoir 40 et de là s'écoule dans le canal 50.

Dès que la première goutte de métal atteint la zone surveillée 10 qui présente une longueur sensiblement plus grande que la largeur du bec 60, le détecteur 20 convertit en grandeur électrique la lumière provenant du métal liquide, amplifie ladite grandeur électrique puis la transmet. Ainsi l'information de l'arrivée du métal est transmise de façon à faire fonctionner l'outillage prévu au moment opportun.

Comme on peut le noter, il est très difficile de détecter avec précision le moment exact de l'arrivée du métal.

En raison de la largeur du bec 60, le métal peut provenir d'un côté ou du milieu du bec 60, si bien que la position de chute du jet ne sera pas constante, mais se déplacera. Ceci empêche une coulée régulière et provoque des variations de poids des pièces métalliques coulées. Donc l'invention permet par la géométrie de la zone 10 d'une longueur supérieur à la largeur du bec 60, d'obtenir la répétabilité des poids de métal, en conséquence une quantité constante qui évite les surépaisseurs de métal pour les pièces coulées.

L'appareil comprend une lampe 241 et peut être orienté dans une phase de réglage avant l'arrivée du métal liquide. La lampe est allumée, les rayons lumineux traversent les fentes 102, 103 et matérialisent par l'image des fentes sur la poche 30 la zone surveillée 10. On pointe l'appareil en superposant l'image des fentes 102, 103 à la zone à observer. Lorsque la lampe 241 reste allumée longtemps, elle produit de la chaleur évacuée par les ailettes 231. Lorsque cette durée est trop importante et que la température s'élève trop, le moyen de sécurité en température 101 déclenche l'interrupteur de l'alimentation électrique de la lampe 241, ce qui éteint cette dernière.

En variante, il est possible de placer la zone surveillée 10 à un autre endroit, comme par exemple à l'extrémité du canal 50.

## Revendications

1. Dispositif de détection de l'arrivée d'un jet de métal liquide, du type comprenant, monté dans un boîtier, un système notamment optique et de détection de la lumière provenant d'une zone surveillée comprise entre au moins deux plans sécants (12, 13), ce système comportant un objectif à focale réglable et sur une carte électronique (1) un convertisseur (2) relié électriquement à un transducteur photo-électrique (3), ledit convertisseur (2) étant relié à un comparateur (5) lui-même relié à un étage tampon (6), le convertisseur, le comparateur et l'étage tampon étant branchés à une alimentation (7), caractérisé en ce que ledit dispositif comprenant également une source de lumière (241), la carte électronique (1) étant située entre la zone (10) de détection de passage du jet de métal liquide et la source de lumière (241), au moins une ouverture rectangulaire est formée dans la carte électronique (1) et coopère avec le transducteur photo-électrique (3) présentant la forme de la zone exploitée de l'image de l'objet surveillé, c'est-à-dire rectangulaire, l'ouverture de la carte électronique (1) étant adaptée pour être traversée par les rayons de la source de lumière (241), de manière à matérialiser la zone de détection par la formation d'une image réelle de l'ouverture (102, 103), les rayons de la source de lumière (241), après traversée de l'ouverture, passant par le même système optique que la lumière détectée.

2. Dispositif selon la revendication 1 comportant un générateur de courant proportionnel (104) pour transmettre une information fonctionnelle continue proportionnelle au courant émis par le transducteur (3).

3. Dispositif selon la revendication 1 dans lequel l'ouverture traversante est adjacente au transducteur photo-électrique (3).

4. Dispositif selon l'une des revendications 1 à 3 dans lequel un moyen de sécurité thermique est relié à la source lumineuse (241).

5. Dispositif selon la revendication 4, caractérisé en ce que le moyen de sécurité thermique est constitué d'un capteur de conversion de la température en signal électrique, un moyen fournissant une référence de la valeur de seuil du signal électrique, d'un comparateur à seuil, d'un relais, le capteur de conversion de la température en signal électrique et le moyen fournissant une référence de la valeur de seuil du signal électrique étant chacun reliés à une entrée du comparateur, le relais étant relié à la sortie du comparateur à seuil par l'intermédiaire d'un étage tampon, et à la source de lumière.

6. Dispositif selon l'une quelconque des revendications 1 à 5, dans lequel le couvercle creux (230) contenant la source de lumière (241) présente un moyen de refroidissement (231), en particulier des ailettes.

7. Dispositif selon l'une quelconque des revendications 1 à 6, dans lequel la source de lumière (241) est constituée d'une lampe halogène et d'un filtre thermique de manière à ne transmettre que la lumière froide.

8. Utilisation du dispositif selon l'une des revendications 1 à 7 pour la détection de l'arrivée de la première goutte d'un jet de métal liquide provenant d'une poche de coulée par l'intermédiaire d'un bec verseur de grande largeur pour l'obtention de pièces métalliques régulières en poids.

## Patentansprüche

1. Vorrichtung zum Erfassen der Ankunft eines Strahls aus flüssigem Metall, die der Art nach ein in einem Gehäuse angebrachtes System aufweist, das insbesondere optisch ist und zur Erfassung des Lichtes dient, das von einer überwachten Zone herkommt, die zwischen mindestens zwei sich schneidenden Ebenen (12, 13) liegt, wobei dieses System ein Objektiv mit einstellbarer Brennweite und auf einer elektronischen Schaltungsplatte (1) einen Wandler (2) aufweist, der elektrisch mit einem photoelektrischen Meßumformer (3) verbunden ist, der genannte Wandler (2) mit einem Vergleicher (5) verbunden ist, der seinerseits mit einer Pufferstufe (6) verbunden ist und der Wandler, der Vergleicher und die Pufferstufe an eine Einspeisung bzw. ein Netzteil (7) angeschlossen sind, dadurch gekennzeichnet, daß die genannte Vorrichtung auch eine Lichtquelle (241) aufweist, die elektronische Schaltungsplatte (1) zwischen der Zone (10) zum Erfassen des Durchtrittes des Strahles aus flüssigem Metall und der Lichtquelle (241) gelegen ist, mindestens eine rechteckige Öffnung in der elektronischen Schaltungsplatte (1) ausgebildet ist und mit dem photoelektrischen Meßumformer (3) zusammenwirkt, mit einer Form der Zone, die vom Bild des überwachten Gegenstandes eingenommen wird, d. h. einer rechteckige Form, die Öffnung der elektronischen Schaltungsplatte (1) dazu eingerichtet ist, von den Strahlen der Lichtquelle (241) derart durchwandert zu werden, daß die Erfassungszone durch die Ausbildung eines reellen Bildes der Öffnung (102, 103) dargesellt ist, und die Strahlen der Lichtquelle (241) nach dem Durchtritt durch die Öffnung durch dasselbe optische System wie das erfaßte Licht hindurchtreten.

2. Vorrichtung nach Anspruch 1, mit einem proportionalen Stromgenerator (104), um auf den Strom, der vom Meßumformer (3) ausgesendet wird, eine funktionelle, ständige und proportionale Information zu übertragen.

3. Vorrichtung nach Anspruch 1, worin die zu durchdringende Öffnung dem photoelektrischen Meßumformer benachbart ist.

4. Vorrichtung nach einem der Ansprüche 1 bis 3, worin thermische Sicherheitsmittel mit der Lichtquelle (241) verbunden sind.

5. Vorrichtung nach Anspruch 4, dadurch gekennzeichnet, daß die thermischen Sicherheitsmittel von einem Meßfühler zum Umwandeln der Temperatur in ein elektrisches Signal, von Mitteln, die einen Bezugswert zum Schwellenwert des elektrischen Signals liefern, von einem Schwellenvergleicher und von einem Relais gebildet sind, wobei der Meßfühler zum Umwandeln der Temperatur in ein elektrisches Signal und die Mittel, die einen Bezugswert zum Schwellenwert des elektrischen Signals liefern, jeweils mit einem Eingang des Vergleichers verbunden sind, und das Relais an den Ausgang des Schwellenvergleichers mittels einer Pufferstufe sowie an die Lichtquelle angeschlossen sind.

6. Vorrichtung nach irgendeinem der Ansprüche 1 bis 5, worin der hohle Deckel (230), der die Lichtquelle (241) enthält, Kühlmittel (231), insbesondere Kühlrippen, aufweist.

7. Vorrichtung nach irgendeinem der Ansprüche 1 bis 6, worin die Lichtquelle (241) von einer Halogenlampe und einem Wärmefilter auf eine solche Weise gebildet ist, daß nur kaltes Licht übertragen wird.

8. Verwendung der Vorrichtung nach irgendeinem der Ansprüche 1 bis 7 für die Erfassung der Ankunft des ersten Tropfens eines Strahles aus flüssigem Metall, der von einer Gießpfanne über eine Ausgußtülle großer Breite herkommt, um dem Gewicht nach regelmäßige Metallstücke zu erhalten.

## Claims

1. Device for detecting the arrival of a stream of liquid metal, of the type comprising, mounted in a casing, a system, especially an optical system, for detecting the light coming from an observed zone included between at least two secant planes (12, 13), this system including an adjustable-focus lens and on an electronic card (1) a converter (2) electrically connected to a photoelectric transducer (3), said converter (2) being connected to a comparator (5), itself connected to a buffer stage (6), the converter, the comparator and the buffer stage being connected to a supply (7), characterised in that said device also comprising a light source (241), the electronic card (1) being situated between the zone (10) of detection of the passage of the stream of liquid metal and the light source (241), at least one rectangular opening is formed in the electronic card (1) and cooperates with the photoelectric transducer (3), having the shape of the utilised zone of the image of the observed object, that is to say rectangular, the opening of the electronic card (1) being adapted to be traversed by the rays of the light source (241) so as to materialise the zone of detection by the formation of a real image of the opening (102, 103), the rays of the light source (241), after traversing the opening, passing through the same optical system as the detected light.

2. Devioe according to Claim 1, including a proportional current generator (104) for transmitting continuous functional information proportional to the current emitted by the transducer (3).

3. Device according to Claim 1, in which the through opening is adjacent to the photoelectric transducer (3).

4. Device according to one of Claims 1 to 3, in which a thermal safety means is connected to the light source (241).

5. Device according to Claim 4, characterised in that the thermal safety means consists of a sensor for converting the temperature into an electrical signal, a means supplying a reference of the threshold value of the electrical signal, a threshold comparator and a relay, the sensor for converting the temperature into an electrical signal and the means supplying a reference of the threshold value of the electrical signal each being connected to an input of the comparator, the relay being connected to the output of the threshold comparator via a buffer stage, and to the light source.

6. Device according to any one of Claims 1 to 5, in which the hollow cover (230) containing the light source (241) has a cooling means (231), in particular fins.

7. Device according to any one of Claims 1 to 6, in which the light source (241) consists of a halogen lamp and of a thermal filter so as to transmit only the cold light.

8. Use of the device according to any one of Claims 1 to 7 for the detection of the arrival of the first drop of a stream of liquid metal coming from a pouring ladle via a pouring lip of large width for obtaining metal parts of consistent weight.
